# EUROPÄISCHE PATENTSCHRIFT

(11) **EP 0 982 491 B1**
(45) Veröffentlichungstag und Bekanntmachung des Hinweises auf die Patenterteilung: **26.05.2004**
(21) Anmeldenummer: 99114637.4
(22) Anmeldetag: 27.07.1999
(51) Int. Cl.: F02M 37/10

(54) **Fördereinheit**
Delivery unit
Unité de refoulement

(30) Priorität: 21.08.1998 DE 19837954
(43) Veröffentlichungstag der Anmeldung: 01.03.2000
(73) Patentinhaber: Siemens Aktiengesellschaft, 80333 München (DE)
(72) Erfinder: Ludwig, Norbert, Dr., 55124 Mainz (DE); Lienig, Klaus-Jürgen, 65843 Sulzbach/Ts. (DE)

(56) Entgegenhaltungen:
- EP-A- 0 379 631
- FR-A- 1 125 684
- US-A- 3 014 623
- US-A- 4 591 319
- US-A- 5 002 467
- US-A- 5 758 627

## Beschreibung

Die Erfindung betrifft eine Fördereinheit zur Förderung von Kraftstoff aus einem Kraftstoffbehälter zu einer Brennkraftmaschine eines Kraftfahrzeuges mit einer in den Kraftstoffbehälter einsetzbaren, an einem Halteteil mittels eines Pumpenhalters befestigten Kraftstoffpumpe.

Solche Fördereinheiten werden in heutigen Kraftfahrzeugen häufig eingesetzt und sind aus der Praxis bekannt. Das Halteteil hat bei der bekannten Fördereinheit ein gemeinsames topfförmiges Gehäuse für einen Kraftstofffilter und die Förderpumpe. Der Pumpenhalter ist als mit dem Gehäuse verschweißter oder verklebter Gehäusedeckel gestaltet. Diese Gestaltung hat den Vorteil, dass die Fördereinheit sehr kompakt aufgebaut ist und sich einfach zu einer vormontierbaren Einheit zusammenfassen lässt.

Nachteilig bei der bekannten Fördereinheit ist jedoch, dass sich die Kraftstoffpumpe nach der Montage der Fördereinheit nicht mehr auswechseln lässt. Hierdurch wird beispielsweise bei einem Defekt der Kraftstoffpumpe die gesamte Fördereinheit unbrauchbar. Weiterhin kann durch diese Gestaltung die vormontierte Fördereinheit nicht nachträglich mit einer auf das vorgesehene Einsatzgebiet angepassten Kraftstoffpumpe zusammengestellt werden. Dies führt insbesondere bei einer Serienproduktion von Fördereinheiten für unterschiedliche Kraftfahrzeuge mit verschiedenen Kraftstoffpumpen zu sehr hohen Lagerhaltungskosten.

Aus der US 5,578,627 ist eine Fördereinheit mit einem Kraftstofffilter und einer Pumpe bekannt, bei der der Filter und die Pumpe in einem Gehäuse angeordnet sind. Die Pumpe wird mit einem Pumpenhalter gegen ein Herausfallen aus dem Gehäuse gesichert. Der Pumpenhalter ist topfförmig gestaltet. Er weist nach außen weisende Rastmittel auf, die von innen in Ausnehmungen des Gehäuses eingreifen, um so den Pumpenhalter der Innenseite des Gehäuses zu befestigen. Der Pumpenhalter fixiert die Pumpe ausschließlich in axialer Richtung.

Der Erfindung liegt das Problem zugrunde, eine Fördereinheit der eingangs genannten Art so zu gestalten, dass sie konstruktiv besonders einfach aufgebaut ist und dass sich die Kraftstoffpumpe nach der Montage der Fördereinheit auswechseln lässt.

Dieses Problem wird erfindungsgemäß dadurch gelöst, dass der Pumpenhalter an der Außenseite des Halteteils lösbar befestigt und zur Verspannung der Kraftstoffpumpe mit dem Halteteil gestaltet ist und dass am Pumpenhalter Führungselemente zum Zentrieren der Kraftstoffpumpe einteilig angeformt sind.

Durch diese Gestaltung lässt sich die Kraftstoffpumpe nach der Montage der Fördereinheit in einem letzten Arbeitsgang montieren. Die Fördereinheit und die Kraftstoffpumpe können daher getrennt für das jeweilige Einsatzgebiet entsprechend zusammengestellt werden. Die Kraftstoffpumpe lässt sich zudem sehr einfach bei einem Defekt auswechseln. Durch die Verspannung der Kraftstoffpumpe mit dem Pumpenhalter und dem Halteteil werden keine aufwendig zu montierenden Befestigungsmittel benötigt. Die Fördereinheit ist daher konstruktiv besonders einfach aufgebaut. Darüber hinaus gewährleisten die am Pumpenhalter angeformten Führungselemente eine besonders zuverlässige Halterung der Kraftstoffpumpe.

Die Montage der erfindungsgemäßen Fördereinheit gestaltet sich besonders einfach und lässt sich zudem automatisieren, wenn der Pumpenhalter mit dem Halteteil verklipst ist.

Der Anschluss der Kraftstoffpumpe gestaltet sich gemäß einer anderen vorteilhaften Weiterbildung der Erfindung konstruktiv besonders einfach, wenn ein Auslassstutzen der Kraftstoffpumpe gegen einen an dem Halteteil angeordneten Anschluss einer Kraftstoffleitung vorgespannt ist.

Die Kraftstoffpumpe lässt sich gemäß einer anderen vorteilhaften Weiterbildung der Erfindung besonders einfach montieren, wenn sie zwischen dem Anschluss der Kraftstoffleitung und dem Pumpenhalter angeordnet ist. Hierdurch wird die Kraftstoffpumpe von dem Pumpenhalter gegen den Anschluss vorgespannt, so dass die Kraftstoffpumpe gleichzeitig mit ihrer Montage an die von ihr wegführende Kraftstoffleitung angeschlossen ist.

Die Kraftstoffpumpe ist gemäß einer anderen vorteilhaften Weiterbildung der Erfindung nach ihrer Montage formschlüssig in axialer und radialer Richtung gehalten, wenn der Anschluss der Kraftstoffleitung den Auslassstutzen übergreifend gestaltet ist. Dies führt zu einer weiteren Vereinfachung der Montage der erfindungsgemäßen Fördereinheit.

Der Auslassstutzen wird gemäß einer anderen vorteilhaften Weiterbildung der Erfindung bei der Montage der Kraftstoffpumpe gegenüber dem Anschluss abgedichtet, wenn der Auslassstutzen in seinem an dem Anschluss der Kraftstoffleitung angrenzenden Bereich ein Dichtungselement aufweist. Zum Anschluss der Kraftstoffpumpe sind hierdurch keine Schläuche mit Schlauchschellen oder dergleichen zu montieren. Bei einer elastischen Gestaltung des Dichtungselementes werden zudem Toleranzen des Auslassstutzens und des Anschlusses der Kraftstoffleitung in axialer und/oder radialer Richtung ausgeglichen. Weiterhin wird durch das Dichtungselement die Übertragung von Körperschall der Kraftstoffpumpe auf das Halteteil gedämpft, so dass die erfindungsgemäße Fördereinheit besonders geringe Geräuschemissionen aufweist.

Die Kraftstoffpumpe wird gemäß einer anderen vorteilhaften Weiterbildung der Erfindung bei der Montage elektrisch kontaktiert, wenn zu der Kraftstoffpumpe führende elektrische Leitungen parallel zu der Vorspannrichtung des Pumpenhalters gegen das Halteteil ausgerichtete, an der Kraftstoffpumpe und dem Halteteil angeordnete Steckkontaktpaare haben. Diese Gestaltung führt zu einer hohen Zeitersparnis bei der Montage der Kraftstoffpumpe an dem Halteteil.

Die erfindungsgemäße Fördereinheit ist besonders kompakt aufgebaut, wenn das Halteteil in einem der Kraftstoffpumpe zugewandten Bereich ein Filtergehäuse für einen Kraftstofffilter aufweist. Hierbei kann in Abhängigkeit von der Gestaltung des Kraftstoffbehälters das Filtergehäuse beispielsweise oberhalb der Kraftstoffpumpe angeordnet sein.

Geräusche der Kraftstoffpumpe werden gemäß einer anderen vorteilhaften Weiterbildung der Erfindung von dem Kraftstofffilter gedämpft, wenn das Filtergehäuse die Kraftstoffpumpe umschließend gestaltet ist. Weiterhin hat das Filtergehäuse durch diese Gestaltung ein großes Volumen bei einem besonders kleinen Bauraum.

Die Kraftstoffpumpe ist gemäß einer anderen vorteilhaften Weiterbildung der Erfindung nach der Montage gegen ein Verdrehen gesichert, wenn ein an der Kraftstoffpumpe befestigter, radial abstehender Vorfilter formschlüssig mit dem Pumpenhalter verbunden ist.

Die Vorspannung der Kraftstoffpumpe gegen das Halteteil gestaltet sich gemäß einer anderen vorteilhaften Weiterbildung der Erfindung konstruktiv besonders einfach, wenn der Pumpenhalter mehrere über den Umfang verteilt angeordnete Federelemente aufweist. Diese Federelemente gleichen zudem Toleranzen der Kraftstoffpumpe und des Halteteils aus.

Das Gewicht der Kraftstoffpumpe muss gemäß einer anderen vorteilhaften Weiterbildung der Erfindung nicht von dem Pumpenhalter abgestützt werden, wenn der Pumpenhalter oberhalb der Kraftstoffpumpe angeordnet ist.

Zur weiteren Dämpfung des Körperschalls der Kraftstoffpumpe trägt es bei, wenn der Pumpenhalter ein Elastomerelement aufweist. Weiterhin dient das Elastomerelement allein oder zusätzlich zu den Fehlerelementen zur Vorspannung der Kraftstoffpumpe gegen das Halteteil.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig. 1:: eine Schnittdarstellung durch eine erfindungsgemäße Fördereinheit,
- Fig. 2:: eine perspektivische Darstellung eines Halteteils der erfindungsgemäßen Fördereinheit aus Fig. 1,
- Fig.3: eine weitere Ausführungsform der erfindungsgemäßen Fördereinheit im Längsschnitt.

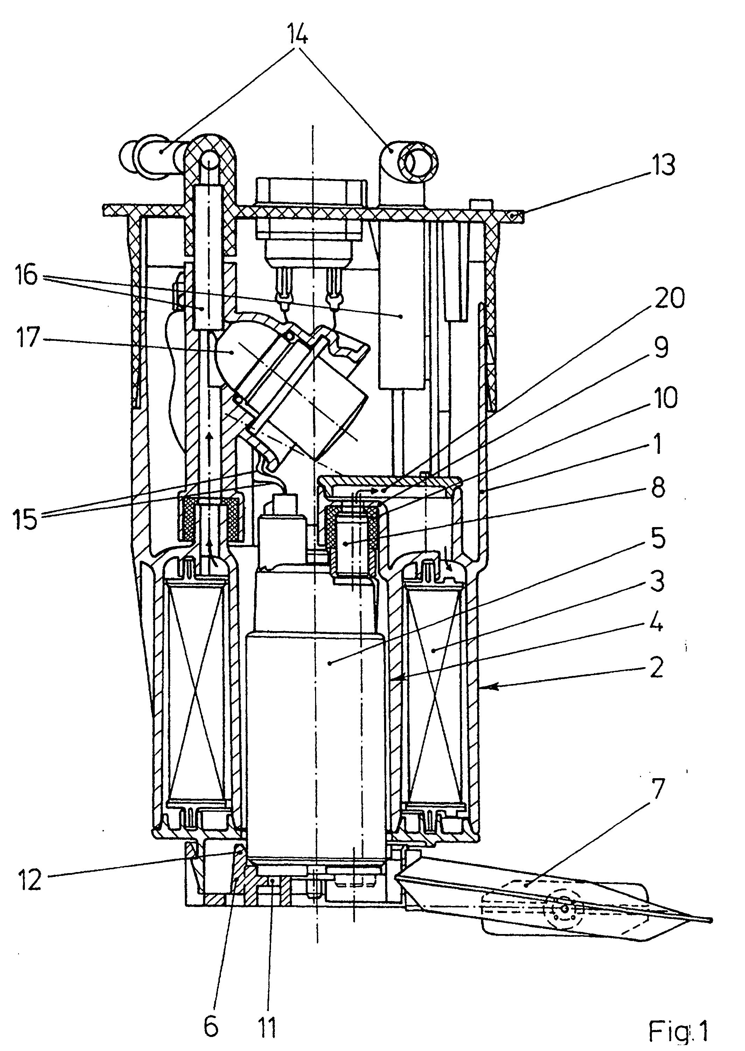

Die Figur 1 zeigt einen Längsschnitt durch eine erfindungsgemäße Fördereinheit mit einem Halteteil 1. Das Halteteil 1 hat im unteren Bereich ein Filtergehäuse 2 mit einem ringförmigen zur Durchströmung mit Kraftstoff von außen nach innen vorgesehenen Filterelement 3. Im Zentrum des Filtergehäuses 2 befindet sich eine Ausnehmung 4 zur Aufnahme einer Kraftstoffpumpe 5. An der Unterseite des Halteteils 1 ist ein die Kraftstoffpumpe 5 tragender Pumpenhalter 6 angeklipst. Die Kraftstoffpumpe 5 lässt sich nach dem Lösen der Klipsverbindung des Pumpenhalters 6 an dem Halteteil 1 einfach aus der Ausnehmung 4 herausnehmen.

Die Kraftstoffpumpe 5 trägt einen radial abstehenden Vorfilter 7. An seiner Oberseite hat die Kraftstoffpumpe 5 einen Auslassstutzen 8, der von einem Anschluss 9 einer zu dem Filtergehäuse 2 führenden Kraftstoffleitung 20 übergriffen wird. Zwischen dem Auslassstutzen 8 der Kraftstoffpumpe 5 und dem Anschluss 9 des Filtergehäuses 2 ist ein Dichtungselement 10 aus einem elastischen Material angeordnet. Der Pumpenhalter 6 hat Federelemente 11 zur Vorspannung der Kraftstoffpumpe 5 mit ihrem Auslassstutzen 8 gegen den Anschluss 9 des Filtergehäuses 2. Hierdurch ist die Kraftstoffpumpe 5 zwischen dem Pumpenhalter 6 und dem Halteteil 1 verspannt. Weiterhin hat der Pumpenhalter 6 an der Kraftstoffpumpe 5 anliegende Führungselemente 12. Die Führungselemente 12 sind elastisch gestaltet und zentrieren die Kraftstoffpumpe 5 in dem Halteteil 1.

Das Halteteil 1 wird zur Montage mit seinem unteren Bereich durch eine nicht dargestellte Öffnung eines Kraftstoffbehälters eines Kraftfahrzeuges eingeführt. Anschließend verschließt ein an der Oberseite des Halteteils 1 angeordneter Flansch 13 die Öffnung. Der Flansch 13 trägt Anschlussstutzen 14 für zu einer ebenfalls nicht dargestellten Brennkraftmaschine des Kraftfahrzeuges führenden Kraftstoffleitungen 16. Die Kraftstoffpumpe 5 wird über durch den Flansch 13 geführte elektrische Leitungen 15 mit elektrischem Strom versorgt. Weiterhin lässt Figur 1 erkennen, dass in einer der Kraftstoffleitungen 16 ein Druckregler 17 angeordnet ist.

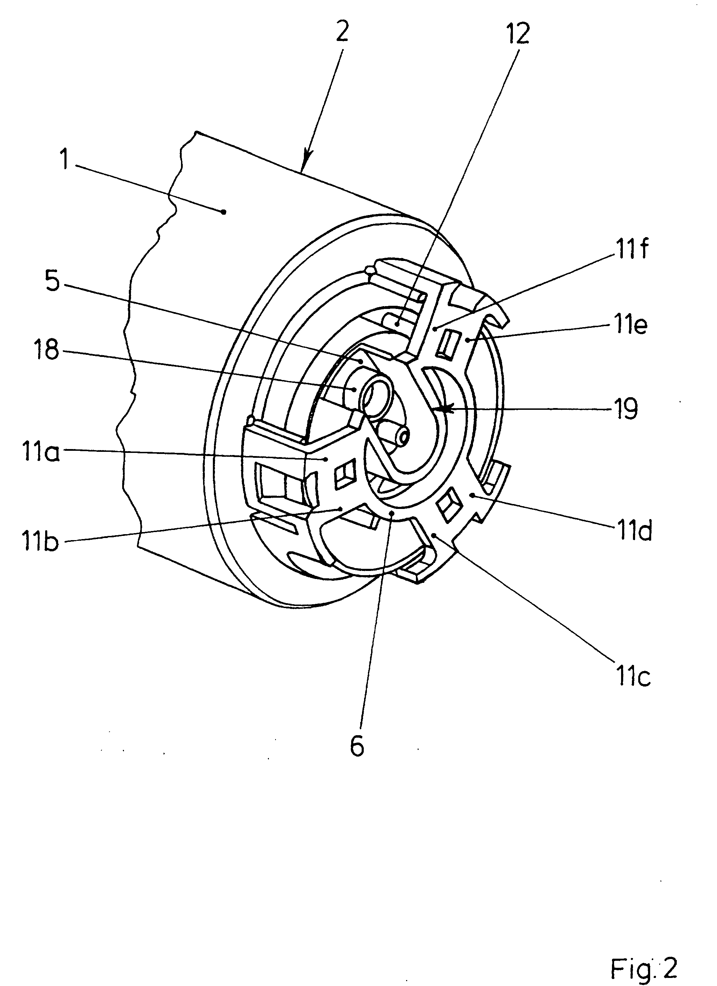

Die Figur 2 zeigt in einer vergrößerten perspektivischen Darstellung den unteren Bereich des Halteteils 1 mit dem Pumpenhalter 6. Zur Vereinfachung der Zeichnung ist hier von dem in Figur 1 dargestellten Vorfilter 7 nur ein Anschlussstück 18 eingezeichnet. Hierbei ist zu erkennen, dass der Pumpenhalter 6 insgesamt sechs über seinen Umfang verteilt angeordnete Federelemente 11a - 11f aufweist. Der Pumpenhalter 6 hat eine U-förmige Ausnehmung 19, in die das Anschlussstück 18 für den Vorfilter 7 aus Figur 1 hineinragt. Dieses Anschlussstück 18 dient als Verdrehsicherung der Kraftstoffpumpe 5.

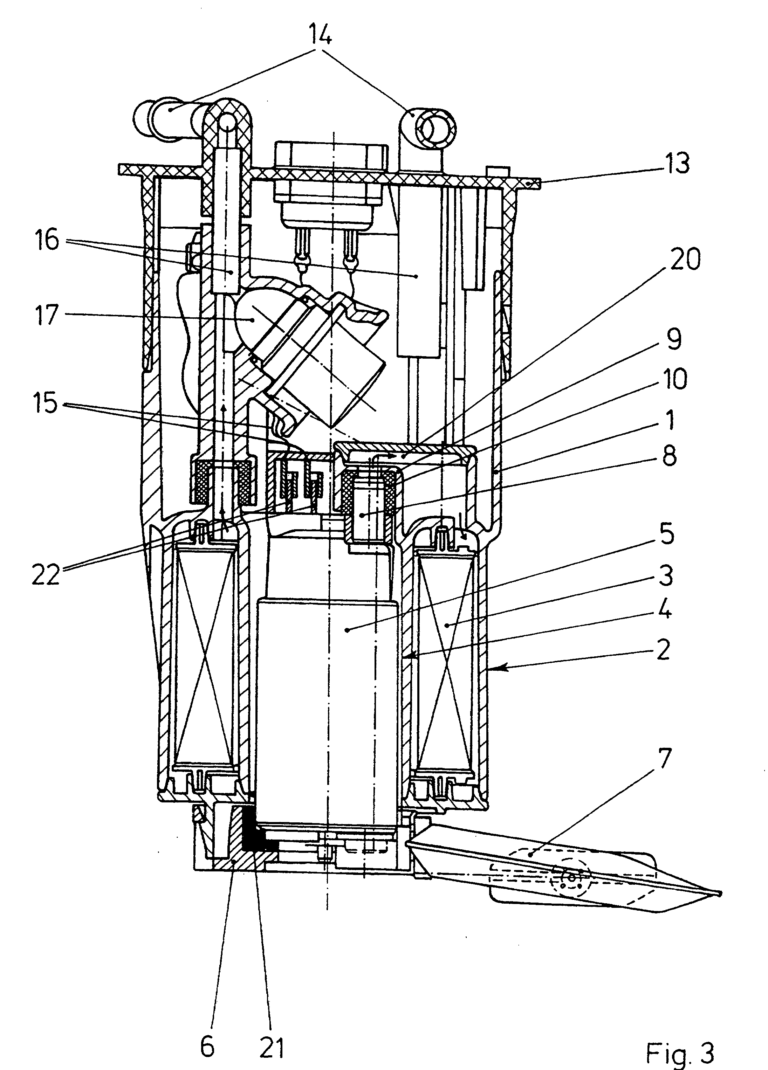

Die Figur 3 zeigt eine weitere Ausführungsform der erfindungsgemäßen Fördereinheit im Längsschnitt. Die Fördereinheit unterscheidet sich von der aus Figur 1 dadurch, dass der Pumpenhalter 6 ein an der Kraftstoffpumpe 5 anliegendes Elastomerelement 21 aufweist. Dieses Elastomerelement 21 erzeugt die erforderliche Vorspannung der Kraftstoffpumpe 5 gegen das Halteteil 1 und dämpft von der Kraftstoffpumpe 5 erzeugte Geräusche. Weiterhin wird die Kraftstoffpumpe 5 von dem Elastomerelement 21 zentriert.

Die zu der Kraftstoffpumpe 5 führenden elektrischen Leitungen 15 haben an der Oberseite der Kraftstoffpumpe 5 und an dem Halteteil 1 angeordnete Steckkontaktpaare 22.

Diese Steckkontaktpaare 22 sind parallel zu der Vorspannrichtung des Pumpenhalters 6 ausgerichtet. Hierdurch ist die Kraftstoffpumpe 5 gleichzeitig mit ihrer Montage in dem Halteteil 1 elektrisch kontaktiert.

## Patentansprüche

1. Fördereinheit zur Förderung von Kraftstoff aus einem Kraftstoffbehälter zu einer Brennkraftmaschine eines Kraftfahrzeuges, mit einer in den Kraftstoffbehälter einsetzbaren, an einem Halteteil (1) mittels eines Pumpenhalters (6) befestigten Kraftstoffpumpe (5), **dadurch gekennzeichnet, dass** der Pumpenhalter (6) an der Außenseite des Halteteils (1) lösbar befestigt und zur Verspannung der Kraftstoffpumpe (5) mit dem Halteteil (1) gestaltet ist, und dass am Pumpenhalter (6) Führungselemente (12) zum Zentrieren der Kraftstoffpumpe (5) einteilig angeformt sind.

2. Fördereinheit nach Anspruch 1, **dadurch gekennzeichnet, dass** der Pumpenhalter (6) mit dem Halteteil (1) verklipst ist.

3. Fördereinheit nach Anspruch 1 oder 2, **dadurch gekennzeichnet, dass** ein Auslassstutzen (8) der Kraftstoffpumpe (5) gegen einen an dem Halteteil (1) angeordneten Anschluss (9) einer Kraftstoffleitung (20) vorgespannt ist.

4. Fördereinheit nach zumindest einem der vorhergehenden Ansprüche, **dadurch gekennzeichnet, dass** die Kraftstoffpumpe (5) zwischen dem Anschluss (9) der Kraftstoffleitung (20) und dem Pumpenhalter (6) angeordnet ist.

5. Fördereinheit nach zumindest einem der vorhergehenden Ansprüche, **dadurch gekennzeichnet, dass** der Anschluss (9) der Kraftstoffleitung (20) den Auslassstutzen (8) übergreifend gestaltet ist.

6. Fördereinheit nach zumindest einem der vorhergehenden Ansprüche, **dadurch gekennzeichnet, dass** der Auslassstutzen (8) in seinem an dem Anschluss (9) der Kraftstoffleitung (20) anliegenden Bereich ein Dichtungselement (10) aufweist.

7. Fördereinheit nach zumindest einem der vorhergehenden Ansprüche, **dadurch gekennzeichnet, dass** zu der Kraftstoffpumpe (5) führende elektrische Leitungen (15) parallel zu der Vorspannrichtung des Pumpenhalters (6) gegen das Halteteil (1) ausgerichtete, an der Kraftstoffpumpe (5) und dem Halteteil (1) angeordnete Steckkontaktpaare (22) haben.

8. Fördereinheit nach zumindest einem der vorhergehenden Ansprüche, **dadurch gekennzeichnet, dass** das Halteteil (1) in einem der Kraftstoffpumpe (5) zugewandten Bereich ein Filtergehäuse (2) für einen Kraftstofffilter (3) aufweist.

9. Fördereinheit nach zumindest einem der vorhergehenden Ansprüche, **dadurch gekennzeichnet, dass** das Filtergehäuse (2) die Kraftstoffpumpe (5) umschließend gestaltet ist.

10. Fördereinheit nach zumindest einem der vorhergehenden Ansprüche, **dadurch gekennzeichnet, dass** ein an der Kraftstoffpumpe (5) befestigter, radial abstehender Vorfilter (7) formschlüssig mit dem Pumpenhalter (6) verbunden ist.

11. Fördereinheit nach zumindest einem der vorhergehenden Ansprüche, **dadurch gekennzeichnet, dass** der Pumpenhalter (6) mehrere über den Umfang verteilt angeordnete Federelemente (11a - 11f) aufweist.

12. Fördereinheit nach zumindest einem der vorhergehenden Ansprüche, **dadurch gekennzeichnet, dass** der Pumpenhalter (6) oberhalb der Kraftstoffpumpe (5) angeordnet ist.

13. Fördereinheit nach zumindest einem der vorhergehenden Ansprüche, **dadurch gekennzeichnet, dass** der Pumpenhalter (6) Führungselemente (12) für die Kraftstoffpumpe (5) hat.

14. Fördereinheit nach zumindest einem der vorhergehenden Ansprüche, **dadurch gekennzeichnet, dass** der Pumpenhalter (6) ein Elastomerelement (21) aufweist.

## Claims

1. Delivery unit for delivering fuel from a fuel tank to an internal combustion engine of a motor vehicle, having a fuel pump (5) which can be inserted into the fuel tank and is fastened on a retaining part (1) by a pump-retaining means (6), **characterized in that** the pump-retaining means (6) is fastened releasably on the outside of the retaining part (1) and is configured for bracing the fuel pump (5) with the retaining part (1), and **in that** guide elements (12) for centring the fuel pump (5) are integrally formed on the pump-retaining means (6).

2. Delivery unit according to Claim 1, **characterized in that** the pump-retaining means (6) is clipped to the retaining part (1).

3. Delivery unit according to Claim 1 or 2, **characterized in that** an outlet stub (8) of the fuel pump (5) is prestressed against a connection (9) of a fuel line (20), said connection being arranged on the retaining part (1).

4. Delivery unit according to at least one of the preceding claims, **characterized in that** the fuel pump (5) is arranged between the connection (9) of the fuel line (20) and the pump-retaining means (6).

5. Delivery unit according to at least one of the preceding claims, **characterized in that** the connection (9) of the fuel line (20) is configured such that it grips over the outlet stub (8).

6. Delivery unit according to at least one of the preceding claims, **characterized in that**, in its region which butts against the connection (9) of the fuel line (20), the outlet stub (8) has a sealing element (10).

7. Delivery unit according to at least one of the preceding claims, **characterized in that** electric cables (15) leading to the fuel pump (5) have pairs of plug-in contacts 22 which are aligned parallel to the direction in which the pump-retaining means (6) is prestressed against the retaining part (1) and are arranged on the fuel pump (5) and the retaining part (1).

8. Delivery unit according to at least one of the preceding claims, **characterized in that**, in a region which is directed towards the fuel pump (5), the retaining part (1) has a filter housing (2) for a fuel filter (3).

9. Delivery unit according to at least one of the preceding claims, **characterized in that** the filter housing (2) is configured such that it encloses the fuel pump (5).

10. Delivery unit according to at least one of the preceding claims, **characterized in that** a radially projecting prefilter (7) which is fastened on the fuel pump (5) is connected in a positively locking manner to the pump-retaining means (6).

11. Delivery unit according to at least one of the preceding claims, **characterized in that** the pump-retaining means (6) has a plurality of resilient elements (11a - 11f) distributed over the circumference.

12. Delivery unit according to at least one of the preceding claims, **characterized in that** the pump-retaining means (6) is arranged above the fuel pump (5).

13. Delivery unit according to at least one of the preceding claims, **characterized in that** the pump-retaining means (6) has guide elements (12) for the fuel pump (5).

14. Delivery unit according to at least one of the preceding claims, **characterized in that** the pump-retaining means (6) has an elastomer element (21).

## Revendications

1. Unité de refoulement servant à refouler du carburant d'un réservoir de carburant vers un moteur à combustion interne de véhicule automobile, comprenant une pompe d'alimentation de carburant (5) qui peut être insérée dans le réservoir de carburant et qui est fixée sur un élément de maintien (1) au moyen d'un support de pompe (6), **caractérisée en ce que** le support de pompe (6) est fixé de manière détachable sur le côté extérieur de l'élément de maintien (1) et est exécuté de manière à permettre la mise en contrainte de la pompe d'alimentation de carburant (5) avec l'élément de maintien (1), et **en ce que** des éléments de guidage (12) servant à centrer la pompe d'alimentation de carburant (5) sont formés d'une seule pièce sur le support de pompe (6).

2. Unité de refoulement selon la revendication 1, **caractérisée en ce que** le support de pompe (6) est clipsé avec l'élément de maintien (1).

3. Unité de refoulement selon la revendication 1 ou 2, **caractérisée en ce qu'**une tubulure de sortie (8) de la pompe d'alimentation de carburant (5) est précontrainte contre un raccord (9) d'une conduite de carburant (20) situé sur l'élément de maintien (1).

4. Unité de refoulement selon au moins une des revendications précédentes, **caractérisée en ce que** la pompe d'alimentation de carburant (5) est située entre le raccord (9) de la conduite de carburant (20) et le support de pompe (6).

5. Unité de refoulement selon au moins une des revendications précédentes, **caractérisée en ce que** le raccord (9) de la conduite de carburant (20) est exécuté de manière à chevaucher la tubulure de sortie (8).

6. Unité de refoulement selon au moins une des revendications précédentes, **caractérisée en ce que** la tubulure de sortie (8) est pourvue d'un élément d'étanchéité (10) dans sa zone adjacente au raccord (9) de la conduite de carburant (20).

7. Unité de refoulement selon au moins une des revendications précédentes, **caractérisée en ce que** des fils électriques (15) menant à la pompe d'alimentation de carburant (5) sont pourvus de paires de contacts à fiches (22) orientées parallèlement à la direction de précontrainte du support de pompe (6) contre l'élément de maintien (1) et situées sur la pompe d'alimentation de carburant (5) et sur l'élément de maintien (1).

8. Unité de refoulement selon au moins une des revendications précédentes, **caractérisée en ce que** l'élément de maintien (1) comporte un boîtier de filtre (2) pour un filtre à carburant (3) dans une zone orientée vers la pompe d'alimentation de carburant (5).

9. Unité de refoulement selon au moins une des revendications précédentes, **caractérisée en ce que** le boîtier de filtre (2) est exécuté de manière à entourer la pompe d'alimentation de carburant (5).

10. Unité de refoulement selon au moins une des revendications précédentes, **caractérisée en ce qu'**un préfiltre (7) fixé sur la pompe d'alimentation de carburant (5) et saillant dans le sens radial est relié par conjugaison de forme au support de pompe (6).

11. Unité de refoulement selon au moins une des revendications précédentes, **caractérisée en ce que** le support de pompe (6) est pourvu de plusieurs éléments élastiques (11a-11f) répartis sur sa circonférence.

12. Unité de refoulement selon au moins une des revendications précédentes, **caractérisée en ce que** le support de pompe (6) est situé au-dessus de la pompe d'alimentation de carburant (5).

13. Unité de refoulement selon au moins une des revendications précédentes, **caractérisée en ce que** le support de pompe (6) possède des éléments de guidage (12) pour la pompe d'alimentation de carburant (5).

14. Unité de refoulement selon au moins une des revendications précédentes, **caractérisée en ce que** le support de pompe (6) est pourvu d'un élément en élastomère (21).
